# FASCICULE DE BREVET EUROPEEN

(11) **EP 0 535 625 B1**
(45) Date de publication et mention de la délivrance du brevet: **09.04.1997**
(21) Numéro de dépôt: 92116717.7
(22) Date de dépôt: 30.09.1992
(51) Int. Cl.: F16J 15/32, B29D 31/00, B29C 33/44, B29C 33/00, G04B 19/28, G04B 37/08

(54) **Garniture d'étanchéité**
Dichtungsring
Sealing ring

(30) Priorité: 04.10.1991 CH 2934/91
(43) Date de publication de la demande: 07.04.1993
(73) Titulaire: WERTHANOR S.A., CH-2400 Le Locle (CH)
(72) Inventeur: Vollert, Alfred, CH-2300 La Chaux-de-Fonds (CH); Ecoffet, Roger, F-25130 Villers-le-Lac (FR)
(74) Mandataire: de Raemy, Jacques

(56) Documents cités:
- CH-A- 549 236
- FR-A- 849 948
- FR-A- 1 185 726
- GB-A- 654 509

## Description

La présente invention est relative à une garniture d'étanchéité.

De telles garnitures sont abondamment utilisées en mécanique lorsqu'il s'agit de rendre étanche un appareil aux poussières et/ou à l'eau par exemple. En mécanique fine ou micromécanique, ces garnitures sont couramment appelées joints o-ring ou encore joints toriques pour leur forme annulaire et leur section généralement ronde.

Un exemple tiré de l'horlogerie fera bien comprendre à quoi peut être utilisé l'objet de la présente invention, cet objet pouvant être utilisé dans bien d'autres domaines connus, comme celui de la photographie (objectifs zoom) ou de l'appareillage en général.

Dans sa première forme d'exécution, l'invention décrite dans le document CH-A-432 388 a pour objet une boîte de montre comprenant deux éléments orientables à volonté l'un par rapport à l'autre, l'un comprenant un premier organe annulaire portant un verre et l'autre un second organe annulaire sur lequel le premier est monté rotativement, une garniture d'étanchéité étant insérée entre ces deux organes.

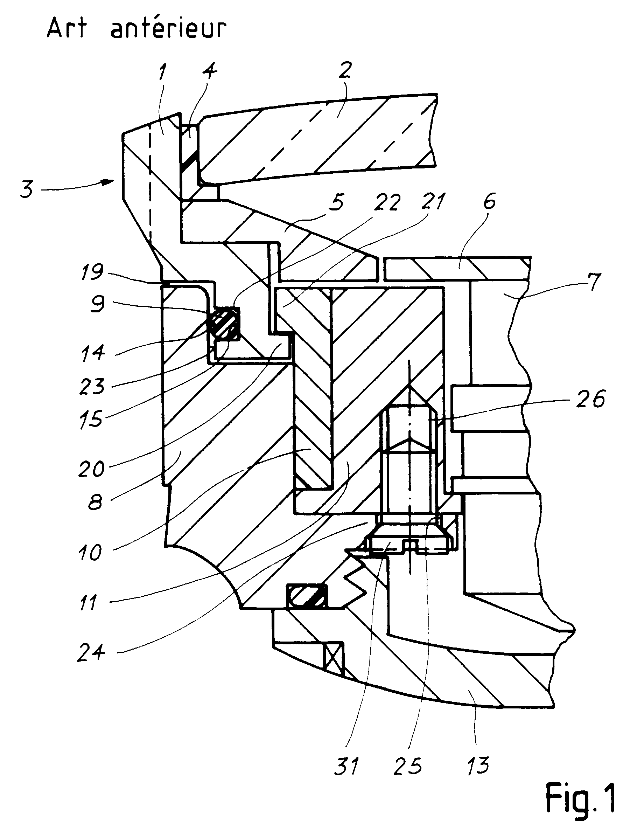

La figure 1 de la présente description montre cet art antérieur quelque peu modifié par rapport au document cité mais restant cependant équivalent pour ce qui concerne la forme et la disposition de la garniture d'étanchéité.

La coupe de la figure 1 montre que la boîte de montre comporte une carrure 8, un fond 13, un mouvement 7 logé dans la boîte, un cadran 6 surmontant le mouvement 7. Un ensemble 3 comportant une lunette 1 présentant un épaulement annulaire intérieur 20, une glace 2 assujettie à la lunette par l'intermédiaire d'une première garniture 4 et un organe annulaire formant réhaut 5, peut être entraîné en rotation par rapport à la carrure et au cadran.

Entre la lunette et la carrure est pincée une seconde garniture ronde 9 qui assure l'étanchéité de la boîte. La garniture 9 est disposée entre deux surfaces cylindriques coaxiales limitant l'une 22 une portion de la lunette et l'autre 23 une portion de la carrure. Un cercle d'encageage 10 - 11 disposé à l'intérieur de la carrure 8 présente une collerette annulaire 21 reposant sur l'épaulement 20 de la lunette 1 pour accrocher ou retenir l'ensemble tournant 3 sur la carrure 8. La carrure 8 présente dans sa partie inférieure une collerette 24 s'étendant vers le centre de la boîte. Sur cette collerette 24 s'appuie le cercle d'encageage 10 - 11. Des vis 31 placées verticalement et traversant des forures 25 pratiquées dans la collerette 24 sont vissées dans des taraudages 26 pratiqués dans le cercle pour solidariser le cercle à la carrure.

Comme mentionné ci-dessus, la garniture 9 présente une section ronde. De par sa fabrication, elle présente aussi deux bavures d'injection diamétralement opposées et symbolisées sur la figure par deux traits 14 et 15. Dans les dimensions ici présentées, l'expérience a montré que lorsque qu'on fait tourner la lunette 1, le joint 9 roule (ou vrille) sur lui-même de manière irrégulière de telle façon que les bavures 14 et 15 forment des hélices sur tout le pourtour de la garniture créant ainsi un chemin entre le monde extérieur et l'intérieur de la boîte, ce chemin étant utilisé par l'eau pour pénétrer le mécanisme contenu dans la boîte.

On a constaté que le phénomène de vrillage peut disparaître si l'on adopte pour le o-ring un rapport entre le diamètre intérieur de l'anneau Di et le diamètre Dt de la section du fil constituant l'anneau qui soit inférieur à une valeur limite qu'on peut estimer à 20. Ainsi, pour un o-ring couramment utilisé en micromécanique et qui présente un diamètre Di compris entre 0,8 et 5 mm et un diamètre Dt compris entre 0,4 et 0,5 mm, ce rapport est au pire de 5/0,4 = 12,5 et ce o-ring ne vrillera pas. Par contre, dans l'exemple montré à la figure 1, le o-ring 9 comporte un diamètre intérieur Di de 38 mm et une section Dt de 0,7 mm d'où un rapport Di/Dt = 38/0,7 = 57,3 fortement défavorable.

Dans ce dernier cas, comme le diamètre Di de 38 mm est imposé par la construction, il faudrait fournir une section de fil d'au moins 1,9 mm pour parvenir à un rapport de 20 et éviter le vrillage du joint. Cependant, cette disposition aurait pour conséquence une augmentation du diamètre hors-tout de la pièce d'horlogerie.

La garniture torique 9 présentée en figure 1 présente encore un second inconvénient. En effet, par la fente référencée 19 sur la figure peuvent s'introduire, non seulement de l'eau, mais des poussières qui, par leur action abrasive, peuvent endommager le joint. Le joint risque alors de ne plus être étanche à l'eau. Pour apporter une solution à ce problème, certains constructeurs disposent deux joints toriques l'un sur l'autre, le premier retenant les poussières et le second - qui reste intact- retenant l'eau. Il s'agit là cependant d'une solution onéreuse et encombrante.

La bague d'étanchéité décrite dans le document FR-A-1 185 726 (préambule de la revendication 1) présente une section transversale polygonale ayant deux régions séparées par une dépression, ce qui peut faire penser à une configuration en haltère. Cependant l'axe de cet haltère se présente perpendiculairement à l'axe de la bague de sorte que si cette dernière est utilisée pour étanchéifier une lunette tournante, on aboutirait à une augmentation prohibitive du diamètre hors-tout de la pièce d'horlogerie. D'autre part, montée entre la carrure 8 et la lunette 1 de la figure 1, cette bague appliquerait la collerette annulaire 21 sur l'épaulement 20 avec une force telle que la lunette ne pourrait être entraînée en rotation qu'au prix d'une très grande force sans compter le risque de grippage.

On connaît également du document FR 849 948 des dispositifs d'étanchéité comprenant une garniture annulaire ayant une section allongée dont l'axe longitudinal est parallèle à l'axe de la garniture annulaire de ces dispositifs. Toutefois, les garnitures décrites dans ce document sont destinées à réaliser l'étanchéité entre deux éléments mobiles en translation l'un part rapport à l'autre.

Le document GB 654 509 décrit par ailleurs un procédé de fabrication d'une garniture d'étanchéité flexible à section généralement circulaire, et selon lequel la garniture obtenue présente des bavures d'injection situées en dehors des zones de pression.

Quant au document CH 549 236, il décrit une boîte de montre étanche dont le verre est fixé à une lunette rotative, l'étanchéité entre la lunette et la carrure étant réalisée à l'aide de deux garnitures d'étanchéité de forme torique disposée l'une au-dessus de l'autre dans un logement ménagé dans la lunette.

Ainsi pour pallier les inconvénients cités, la présente invention propose une garniture qui d'une part ne se met pas en vrille et d'autre part remplace deux joints superposés. Pour cela cette garniture est caractérisée par le fait que sa section droite présente la forme d'un haltère comportant deux bourrelets reliés par un isthme, l'axe de l'haltère passant par l'isthme et les deux bourrelets étant parallèle à l'axe de la garniture annulaire.

L'invention sera expliquée maintenant à l'aide de la description qui suit donnée à titre d'exemple et en s'aidant du dessin qui l'illustre et dans lequel :
- la figure 1 est une coupe dans une boîte de pièce d'horlogerie montrant une garniture d'étanchéité selon l'art antérieur, ladite figure ayant été discutée plus haut,
- la figure 2 est une vue semblable à celle de la figure 1 où une garniture selon un premier mode d'exécution de l'invention est présentée,
- la figure 3 est une vue partielle et à échelle agrandie de la coupe montrée en figure 2 où une garniture selon un second mode d'exécution de l'invention est présentée, et
- la figure 4 montre un procédé de fabrication de la garniture présentée en figure 3.

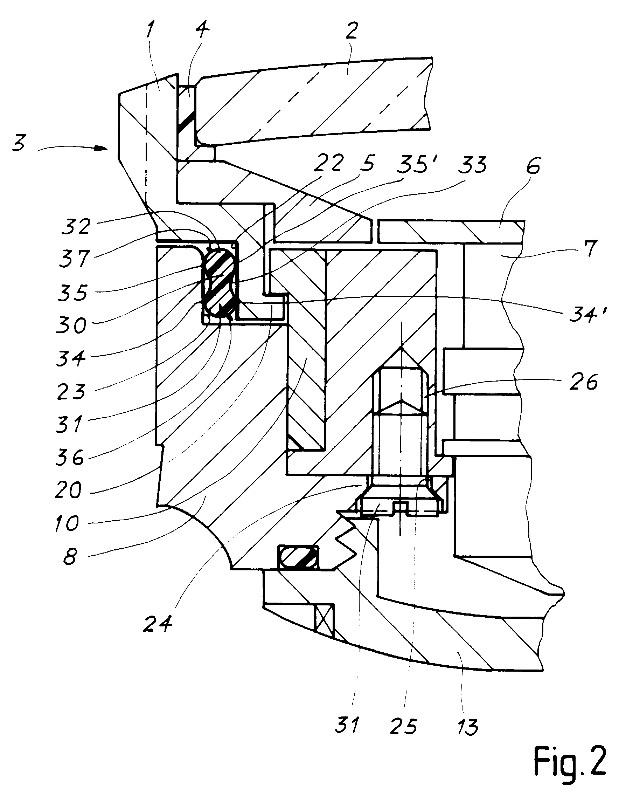

La figure 2 reprend en partie ce qui est montré en figure 1, les mêmes pièces portant donc les mêmes références. A la place du joint 9 de la figure 1, on trouve, sur la figure 2, un joint 30 dont la section droite présente la forme d'un haltère défini par deux bourrelets 31 et 32 reliés par un isthme 33. Il s'agit là d'une définition selon l'acception la plus générale de l'invention.

Plus particulièrement et selon un premier mode d'exécution de l'invention la figure 2 montre que les bourrelets présentent une section arrondie rappelant en quelque sorte les deux joints o-ring dont il a été question plus haut. La garniture 30 est montée entre deux éléments circulaires, la lunette 1 et la carrure 8, qui sont emboîtés l'un dans l'autre, la lunette 1 étant susceptible de se déplacer rotativement par rapport à la carrure 8. Ce montage définit des zones de pression localisées sur les bourrelets 31 et 32, ces zones étant ici au nombre de quatre, soit les zones 34 et 34' pour le bourrelet 31 et les zones 35 et 35' pour le bourrelet 32. Lors du moulage de la garniture 30, on s'arrange pour que les bavures d'injection 36 et 37 soient situées en dehors des zones de pression, de telle façon que ces zones soient parfaitement lisses, les bavures pouvant dans certains cas créer un chemin pour l'eau. Ainsi la garniture 30 remplitelle bien le rôle qu'on attend d'elle, à savoir l'impossibilité de se mettre en vrille et la faculté de retenir les poussières par le premier bourrelet 32 et l'eau par le second bourrelet 31.

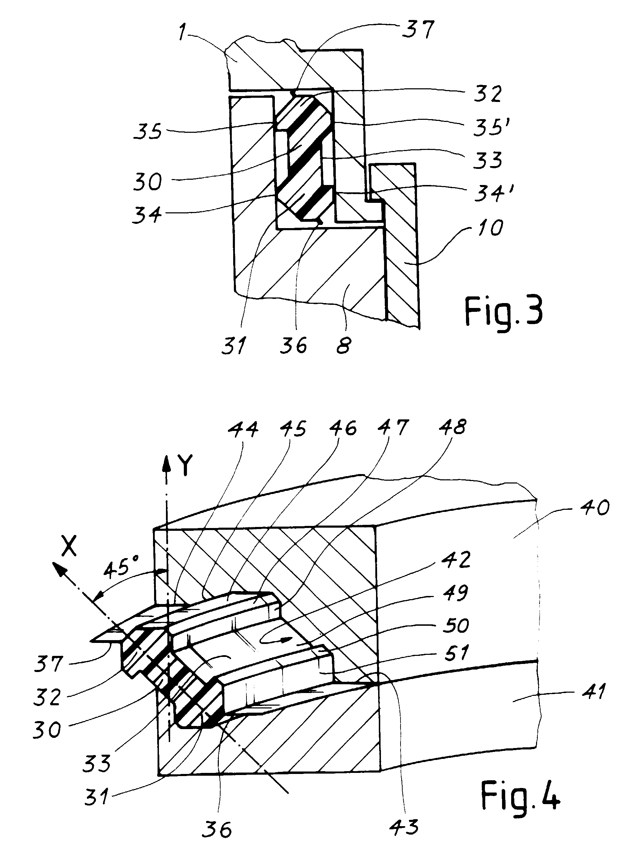

La figure 3 montre un second mode préféré d'exécution de l'invention. Ici les bourrelets 31 et 32 présentent une section polygonale. De la même façon qu'en figure 2, ces bourrelets sont reliés par un isthme 33. On retrouve ici les mêmes zones de pression 34, 34', 35 et 35'. Ici également, lors du moulage de la garniture 30, on s'arrange pour que les bavures d'injection 36 et 37 soient situées en dehors des zones de pression. Le choix de la forme polygonale des bourrelets 31 et 32 est dicté par le souci d'éloigner au maximum les zones de pression des bavures d'injection. Cet éloignement est favorisé par une méthode particulière de fabrication du joint, comme on va le voir maintenant.

La figure 4 permet d'expliquer le procédé de fabrication de la garniture 30 montré en figure 3. La figure 4 est une vue en perspective montrant un moule partiellement sectionné d'où émerge le joint qu'il s'agit d'obtenir. Le moule est réalisé en une partie supérieure 40 et une partie inférieure 41. Quand ces parties sont réunies se trouve formée une cavité annulaire 42 dont la section droite présente la forme d'un haltère comportant deux bourrelets 31 et 32 présentant une section polygonale, lesdits bourrelets étant reliés par un isthme 33. Il est intéressant de noter que l'axe x de l'haltère est incliné à la manière du rebord d'une assiette.

Quand les deux parties 40 et 41 du moule sont assemblées, sont formés ce qu'on appelle deux plans de joints 43 et 44 par lesquels a lieu l'injection de matière élastique. Une fois cette matière injectée (il s'agit généralement d'un produit polymérisable), on désassemble les deux parties du moule et on extrait la garniture 30. Par découpage, on sépare enfin la garniture de la masse d'injection. Ce découpage laisse cependant subsister les bavures d'injection dont il a été question plus haut, et qu'il est souhaitable de maintenir le plus éloigné possible des zones où s'exercera la pression sur les bourrelets quand la garniture sera montée sur l'objet qu'elle a pour but de rendre étanche.

Dans le cas particulier de la figure 4, l'inclinaison X de la cavité annulaire 42 par rapport à la direction Y de désassemblage des moules est de l'ordre de 45°. De même la section polygonale des bourrelets de la cavité présente des droites 45, 46, 47, 48, 49, 50 et 51 qui sont orientées de manière à permettre ce désassemblage sans contrainte et donc sans abîmer la matière élastique dont est faite la garniture quand on procède au démoulage. Si cette inclinaison n'existait pas et si la garniture était moulée dans la position qu'elle présente quand elle est montée sur l'objet à étanchéifier, la matière serait arrachée lors du démoulage et le joint impropre à être utilisé. De même cette inclinaison permet de rejeter les bavures d'injection en dehors des zones de pression.

Le fait que le joint soit incliné à la sortie du moulage ne gêne en rien son utilisation droite dans la pièce à rendre étanche, cela tenant surtout au fait qu'il existe un certain redressement naturel et que le diamètre interne Di est grand par rapport à la section Dt.

On mentionnera que la technique de moulage qui vient d'être décrite peut s'appliquer tout aussi bien à la garniture à bourrelets arrondis selon figure 2. Là cependant les bavures d'injection seront plus proches des zones de pression.

Dans l'exemple d'utilisation de la garniture selon l'invention, on a mentionné plus haut une pièce d'horlogerie. L'invention n'est pas limitée à ce domaine d'application, mais trouve son emploi lorsqu'on est en présence de deux pièces dont les vitesses de déplacement sont différentes, ces pièces étant montées concentriquement ou télescopiquement.

## Revendications

1. Garniture d'étanchéité annulaire (30) moulée par injection, ayant une section droite qui présente la forme d'un haltère comportant deux bourrelets (31, 32) reliés par un isthme (33), caractérisée par le fait que l'axe de l'haltère passant par l'isthme et les deux bourrelets est parallèle à l'axe de la garniture annulaire et par le fait qu'elle est montée entre deux éléments circulaires (1, 8) emboîtés l'un dans l'autre et susceptibles de se déplacer en rotation l'un par rapport à l'autre autour d'un axe sensiblement parallèle à l'axe de la garniture, ledit montage définissant des zones de pression (34, 34', 35, 35') localisées sur lesdits bourrelets, les bavures d'injection (36, 37) présentées par ladite garniture étant situées en dehors desdites zones de pression.

2. Garniture selon la revendication 1, caractérisée par le fait que les bourrelets présentent une section arrondie.

3. Garniture selon la revendication 1, caractérisée par le fait que les bourrelets présentent une section polygonale.

4. Procédé de fabrication de la garniture selon la revendication 3, caractérisé par le fait qu'on fournit un moule en deux parties (40, 41) présentant, une fois réunies, une cavité annulaire (42) dont la section droite présente la forme d'un haltère, l'axe (X) dudit haltère étant incliné à la manière du rebord d'une assiette, qu'on injecte dans ladite cavité une matière élastique, qu'on désassemble les deux parties du moule pour en extraire la garniture et qu'on sépare la garniture de la masse d'injection par découpage.

5. Procédé selon la revendication 4, caractérisé par le fait que l'inclinaison de ladite cavité annulaire par rapport à la direction de désassemblage (Y) des moules est telle que lesdites bavures d'injection se trouvent en dehors desdites zones de pression et que la section polygonale des bourrelets de ladite cavité présente des droites (45 à 51) orientées de manière à permettre ledit désassemblage sans contrainte sur la matière dont est faite la garniture.

6. Utilisation de la garniture selon la revendication 1, caractérisée par le fait que ladite garniture est disposée entre une carrure (8) et une lunette tournante (1) d'une pièce d'horlogerie.

## Patentansprüche

1. Ringförmiges, durch Injektion gespritztes Dichtungselement (30) mit seinem Querschnitt, der die Form einer Hantel mit zwei Wülsten (31, 32), die durch einem Isthmus (33) verbunden sind, aufweist, dadurch gekennzeichnet, dass die Achse der Hantel durch den Isthmus verläuft und die beiden Wülste zur Achse des ringförmigen Elements parallel sind, und dass es zwischen zwei kreisförmigen Bauteilen (1, 8) montiert ist, die ineinander gefügt und fähig sind, sich rotativ gegeneinander um eine Achse, die im wesentlichen parallel zur Achse des Dichtungselementes ist, zu verschieben, wobei die Montage die auf den Wülsten lokalisierte Druckzonen (34, 34', 35, 35') definiert und die Spritzangüsse (36, 37), welche das Dichtungselement aufweist, ausserhalb der Druckzonen angeordnet sind.

2. Element nach Anspruch 1, dadurch gekennzeichnet, dass die Wülste einen abgerundeten Querschnitt aufweisen.

3. Element nach Anspruch 1, dadurch gekennzeichnet, dass die Wülste einen polygonalen Querschnitt aufweisen.

4. Verfahren zum Herstellen des Dichtungselements nach Anspruch 3, dadurch gekennzeichnet, dass man eine zweiteilige Form (40, 41) bereitstellt, welche nach Zusammenfügen einen Ringhohlraum (42) begrenzt, dessen Querschnitt die Form einer Hantel aufweist, wobei die Achse (X) der Hantel nach Art eines Tellerrandes schräg verläuft, dass man die beiden Teile der Form voneinander löst, um das Dichtungselement zu entnehmen, und dass man das Dichtungstelement von der Injecktionsmasse durch Abscheren trennt.

5. Verfahren nach Anspruch 4, dadurch gekennzeichnet, dass die Schräge des ringförmigen Hohlraums relativ zur Richtung des Öffnens (Y) der Formteile derart ist, dass die Spritzangüsse sich ausserhalb der Druckzonen befinden und dass der polygonale Querschnitt der Wülste des Hohlraums Geraden (45 bis 51) aufweist, die so orientiert sind, dass die Formöffnung ohne Zwangausübung auf das Material, aus dem das Dichtungselement hergestellt ist, erfolgen kann.

6. Anwendung des Dichtungselementes nach Anspruch 1, dadurch gekennzeichnet, dass das Dichtungselement zwischen einem Gehäusering (8) und einer drehbaren Lünette (1) eines Zeitmessgerätes angeordnet ist.

## Claims

1. Annular injection moulded water-tight packing (30), having a straight cross-section in the form of a dumbbell including two enlargements (31, 32) connected by a neck (33), characterized by the fact that the axis of the dumbbell passing through the neck and the two enlargements is parallel to the axis of the packing and by the fact that it is assembled between two circular elements (1, 8) fitted into one another and adapted to be displaced relative to one another around an axis substantially parallel to the packing axis, said assembly defining pressure zones (34, 34', 35, 35') localized on said enlargements, the injection burrs (36, 37) presented on said packing being located outside said pressure zones.

2. Packing according to claim 1, characterized by the fact that the enlargements exhibit a rounded cross-section.

3. Packing according to claim 1 characterized by the fact that the enlargements exhibits a polygonal cross-section.

4. Method of manufacture of the packing according to claim 3, characterized by the fact that a two-part mould (40, 41) is provided which once the parts are joined exhibits an annular cavity (42) the straight cross-section of which has the form of a dumbbell, the axis (X) of said dumbbell being inclined like the rim of a plate, that an elastic material is injected into said cavity, that the two parts of the mould are taken apart in order to extract the packing and that the packing is separated from the injection residue by cutting.

5. Method according to claim 4, characterized by the fact that the inclination of said annular cavity relative to the direction of separation (Y) of the mould parts is such that said injection burrs are located outside said pressure zones and that the polygonal cross-section of the enlargements in said cavity exhibits straight lines (45 to 51) oriented so as permit taking the mould apart without stressing the material of which the packing is made.

6. Utilization of the packing according to claim 1, characterized by the fact that said packing is arranged between a caseband (8) and a rotating bezel (1) in the timepiece.
